# NOUVEAU FASCICULE DE BREVET EUROPEEN

(11) **EP 3 404 334 B2**
(45) Date de publication et mention de la décision concernant l'opposition: **09.08.2023**
(45) Mention de la délivrance du brevet: 19.08.2020
(21) Numéro de dépôt: 18173151.4
(22) Date de dépôt: 18.05.2018
(51) Int. Cl.: F24D 17/00, F24D 17/02, F24D 19/10

(54) **PROCEDE ET INSTALLATION DE STOCKAGE D'ENERGIE UTILISANT UN CHAUFFE-EAU**
ENERGIESPEICHERVERFAHREN UND -ANLAGE, DIE EINEN WASSERBOILER UMFASST
METHOD AND FACILITY FOR ENERGY STORAGE USING A WATER HEATER

(30) Priorité: 19.05.2017 FR 1754477
(43) Date de publication de la demande: 21.11.2018
(73) Titulaire: Atlantic Industrie, 85000 La Roche sur Yon (FR)
(72) Inventeur: FLEURY, Bernard, 85000 LA ROCHE SUR YON (FR); GOURVES, Frédéric, 85000 AUBIGNY (FR)
(74) Mandataire: Plasseraud IP

(56) Documents cités:
- EP-A1- 3 065 021
- DE-A1-102011 090 141
- DE-A1-102014 011 331
- US-A1- 2014 153 913
- US-A1- 2015 354 833

## Description

L'invention a pour objet un procédé et une installation de stockage d'énergie utilisant un chauffe-eau sanitaire alimenté en énergie par un système photovoltaïque.

Actuellement, les systèmes photovoltaïques possèdent une sortie filaire pouvant être raccordée au chauffe-eau afin de commander le chauffage de l'eau contenue dans le chauffe-eau. Ce genre de système fait une demande de chauffe lorsque la puissance fournie par les panneaux photovoltaïques dépasse un certain seuil. Si le seuil d'énergie n'est pas atteint cette dernière est alors renvoyée sur le réseau à perte. Le document EP3065021 montre un exemple de système photovoltaïque comprenant un chauffe-eau. Ce document divulgue une installation ayant les caractéristiques du préambule de la revendication 1.

Le but de l'invention est de remédier aux inconvénients précités par un moyen de pilotage simple.

A cet effet, l'invention a pour objet une installation de stockage d'énergie telle que revendiquée.

Grâce à l'installation de stockage d'énergie selon la présente invention, il est possible de stocker sous forme thermique, dans le chauffe-eau, de l'énergie électrique qui serait autrement injectée à perte dans le réseau.

Selon des caractéristiques additionnelles de l'invention, prises isolément ou en combinaison :
- la valeur de base de la consigne de température est fonction de consommations antérieures en eau chaude du chauffe-eau, caractéristiques du chauffe-eau, et/ou prévisions de consommation.
- l'organe de chauffe du chauffe-eau est électrique et/ou thermodynamique.
   l'organe de chauffe du chauffe-eau inclut un élément électrique, l'élément électrique incluant une pluralité de résistances, les résistances étant chacune couplée à un relai, les relais étant connectés à la carte de régulation, la carte de régulation étant adaptée à déterminer les relais à actionner en fonction de la valeur de surplus de la consigne de température.
- l'organe de chauffe du chauffe-eau inclut une pompe à chaleur avec vitesse de compresseur variable, la carte de régulation étant adaptée à contrôler une vitesse du compresseur.
- l'installation inclut de plus un mitigeur thermostatique connecté au chauffe-eau, le mitigeur thermostatique étant adapté à délivrer l'eau du chauffe-eau à une température maximale égale à la valeur de base de la consigne de température lorsque la température de l'eau du chauffe-eau est à ou au-dessus de la valeur de base de la consigne de température.

L'invention a aussi pour objet un procédé de régulation dans lequel, si le gestionnaire d'énergie communique à la carte de régulation qu'un surplus d'énergie est produit par le système photovoltaïque, la carte de régulation commande à l'organe de chauffe de chauffer l'eau en utilisant l'énergie produite par le système photovoltaïque en surplus, la puissance de chauffe chauffant l'eau à une température égale ou inférieure à une valeur de surplus de la consigne de température Tsur, la valeur de surplus de la consigne de température Tsur étant supérieure à la valeur de base de la consigne de température Tbas.

Selon des caractéristiques additionnelles de l'invention, prises isolément ou en combinaison :
- si le thermomètre mesure une température Teau de l'eau contenue dans le chauffe-eau égale ou supérieure à la valeur de base de la consigne de température Tbas, la carte de régulation ne commande pas l'organe de chauffe tant qu'aucun surplus d'énergie produit par le système photovoltaïque n'est disponible.
- si le thermomètre mesure une température Teau de l'eau contenue dans le chauffe-eau inférieure à la valeur de base de la consigne de température Tbas et si le gestionnaire d'énergie communique à la carte de régulation qu'aucun surplus d'énergie n'est produit par le système photovoltaïque, la carte de régulation commande l'organe de chauffe de chauffer l'eau jusqu'à la valeur de base de la consigne de température Tbas en utilisant de l'énergie autre que celle produite par le système photovoltaïque.
- selon un mode de fonctionnement, lorsque la puissance de chauffe provenant du surplus photovoltaïque est inférieure à la valeur de surplus de la consigne de température Tsur, la carte de régulation commande à l'organe de chauffe de chauffer l'eau jusqu'à la valeur de base de la consigne de température Tbas en utilisant, de façon complémentaire à l'énergie provenant du surplus photovoltaïque, de l'énergie autre que celle produite par le système photovoltaïque.
- le mode de fonctionnement est un mode de fonctionnement nocturne.
- le mode de fonctionnement nocturne est activé en période diurne avant le coucher de soleil.

D'autres caractéristiques et avantages de l'invention apparaîtront encore à la lecture de la description qui va suivre. Celle-ci est purement illustrative et doit être lue en regard des dessins annexés sur lesquels :
- la figure 1 est une vue schématique d'une installation de stockage d'énergie utilisant un chauffe-eau alimentant un local en eau chaude ;
- la figure 2 est une vue schématique d'un mode de réalisation d'une carte de régulation et d'un organe de chauffage pour un chauffe-eau électrique en combinaison avec le dispositif de stockage d'énergie de la figure 1 ;
- la figure 3 est une vue schématique d'un autre mode de réalisation d'une carte de régulation et d'un organe de chauffage pour un chauffe-eau thermodynamique en combinaison avec le dispositif de stockage d'énergie de la figure 1 ; et
- la figure 4 est un graphe représentant un exemple de différents niveaux d'énergie qui interviennent dans l'activation de l'organe de chauffe pour le stockage d'énergie.

### Installation de stockage d'énergie utilisant un chauffe-eau

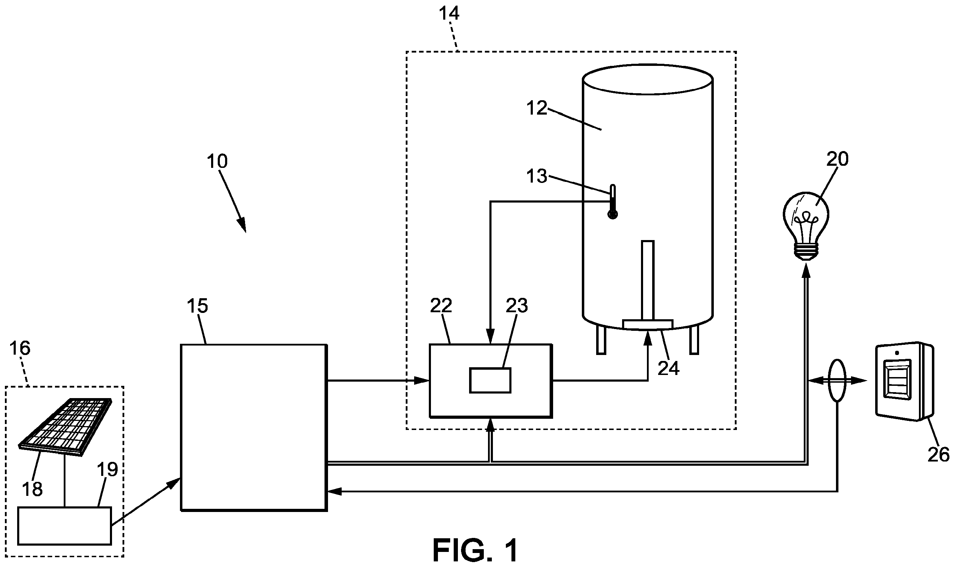

Un dispositif de stockage d'énergie utilisant un chauffe-eau 12 alimentant un local, par exemple une habitation, en eau chaude sanitaire est référencé 10 sur la figure 1.

L'installation 10 de stockage d'énergie inclut un dispositif de chauffage d'eau 14 destiné à alimenter l'habitation en eau chaude, un gestionnaire d'énergie 15 en communication avec le dispositif de chauffage d'eau 14 pour moduler le chauffage de l'eau, et un système photovoltaïque 16 approvisionnant le dispositif de chauffage d'eau 14 en énergie pour le chauffage de l'eau. Le dispositif de chauffage d'eau 14 est aussi alimenté en énergie par le réseau électrique.

Le système photovoltaïque 16 comprend un ou plusieurs panneaux photovoltaïques 18 qui convertissent une lumière reçue en courant continu, et un convertisseur 19 qui convertit le courant continu produit par les panneaux photovoltaïques 18 en courant alternatif. Il est entendu que le convertisseur 19 pourrait être optionnel.

Le dispositif de chauffage d'eau 14 comprend un chauffe-eau 12 piloté par une carte de régulation 22.

Le chauffe-eau 12 peut être un chauffe-eau électrique ou thermodynamique. Le chauffe-eau 12 pourrait aussi avoir des éléments de chauffage thermodynamique et électrique combinés.

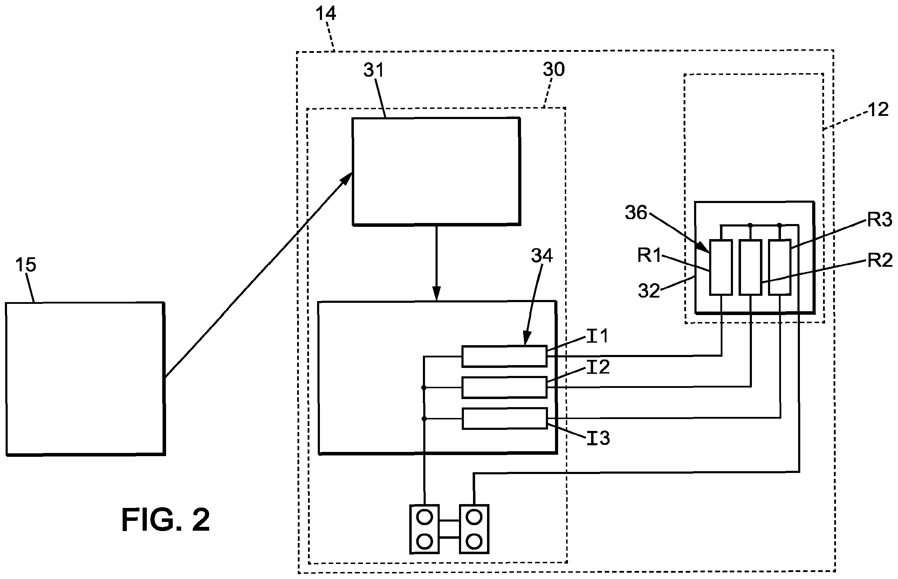

Le chauffe-eau 12 inclut un thermomètre 13 permettant de connaître une température de l'eau contenue dans le chauffe-eau 12, et un organe de chauffe 24 pour chauffer de l'eau contenue dans le chauffe-eau 12 en fonction notamment de commandes émises par la carte de régulation 22. Dans le cas d'un chauffe-eau thermodynamique, l'organe de chauffe 24 serait par exemple une pompe à chaleur avec vitesse de compresseur variable. Dans le cas d'un chauffe-eau électrique, l'organe de chauffe 24 inclurait par exemple une ou plusieurs résistances (fixes ou variables) connectées à une ou plusieurs épingles. Un exemple d'organe de chauffe 24 pour un chauffe-eau électrique sera décrit ci-dessous en conjonction avec la figure 2.

La carte de régulation 22 est une carte électronique qui comporte plusieurs entrées logiques afin de moduler la puissance de chauffe de l'organe de chauffe 24 en fonction du surplus d'énergie photovoltaïque produit. La carte de régulation 22 inclut un module de calcul 23, qui est en communication avec le gestionnaire d'énergie 15 et le thermomètre 13. Le module de calcul 23 permet de déterminer à quel moment chauffer l'eau du chauffe-eau 12 (notamment par les données du thermomètre 13), mais aussi de réguler les apports en énergie entre l'énergie électrique du réseau et celle produite par le système photovoltaïque 16, afin d'optimiser l'apport en énergie photovoltaïque.

Par exemple, le module de calcul 23 détermine une puissance de chauffe en fonction au moins du surplus éventuel d'énergie photovoltaïque, de la température de l'eau dans le chauffe-eau 12 et d'une consigne de température. La consigne de température est une température de référence à laquelle l'eau dans le chauffe-eau 12 doit se trouver (i.e. température maximale de chauffe). La consigne de température a plusieurs valeurs selon qu'un surplus d'énergie photovoltaïque est présent.

Une valeur de base de la consigne de température est une température maximum admissible par l'utilisateur pour l'eau qui lui est délivrée. Par exemple, si l'utilisateur désire une température maximale de 55 degrés Celsius, la valeur de base de la consigne de température sera 55 degrés. La valeur de base de la consigne de température pourrait être transmise à la carte de régulation 22 par l'utilisateur par l'intermédiaire d'une interface (par exemple un clavier).

La consigne de température a aussi une valeur haute, valeur de surplus Tsur, qui est supérieure à la valeur de base et qui est la température maximum atteignable lorsqu'un surplus d'énergie photovoltaïque est disponible. Ainsi, lorsqu'un surplus d'énergie photovoltaïque est disponible, la carte de régulation 22 chauffe l'eau afin de convertir le surplus d'énergie photovoltaïque en énergie thermique, utilisable par l'utilisateur instantanément ou dans un futur proche.

Cette température peut être transmise à la carte de régulation 22 par l'utilisateur par l'intermédiaire de l'interface, ou bien être calculée par la carte de régulation en fonction de la valeur de base de la consigne de température. La valeur de surplus de la consigne de température Tsur est par exemple 70 degrés Celsius.

L'installation 10 peut inclure un mitigeur thermostatique connecté au chauffe-eau 12. Le mitigeur pourrait, par exemple, se trouver en sortie du chauffe-eau 12. Le mitigeur thermostatique est adapté à délivrer l'eau du chauffe-eau 12 sur une échelle de température basée sur la valeur de base de la consigne de température Tbas. Le mitigeur thermostatique peut délivrer l'eau du chauffe-eau 12 à une température maximale égale à la valeur de base de la consigne de température même si la température de l'eau du chauffe-eau 12 est à température au-dessus de la valeur de base, par exemple lorsqu'il est à la valeur de surplus.

Une fois la puissance de chauffe déterminée par le module de calcul 22 selon un procédé détaillé ci-dessous, celui-ci transmet la transmet à l'organe de chauffe 24 pour chauffer l'eau de façon correspondante.

Le thermomètre 13 permet de vérifier si l'eau atteint la consigne de température et de stopper le chauffage à ce moment-là, via la carte de régulation 22.

Dans un mode de réalisation, le gestionnaire d'énergie 15 en coopération avec la carte de régulation 22 permet de stocker un surplus d'énergie produite par les panneaux photovoltaïques 18 en énergie thermique. En effet, dans certains cas, il se peut que le système photovoltaïque 16 produise plus d'énergie que ce que le dispositif de chauffage d'eau 14 (et possiblement aussi les appareils électriques 20) ne requièrent. Grâce à l'installation et procédé décrits ci-dessous, au moins une partie de ce surplus d'énergie photovoltaïque produit peut être réinjectée dans le dispositif de chauffage d'eau 14 au lieu d'être injectée à perte au réseau d'alimentation. Ainsi, l'énergie qui aurait dû être retournée au réseau (donc à perte) est transformée en énergie thermique en chauffant l'eau du chauffe-eau de façon additionnelle à son fonctionnement habituel. Le dispositif de chauffage d'eau 14 fonctionne alors comme un stockage d'énergie, en convertissant de l'énergie électrique produite en surplus par le système photovoltaïque 16 en énergie thermique (eau chauffée). Si le surplus est plus important que la puissance de chauffe possible par le chauffe-eau, la différence pourrait être réinjectée dans le réseau.

Afin de déterminer ce surplus, le gestionnaire d'énergie 15 compare l'énergie produite par les panneaux photovoltaïques 18 avec l'énergie consommée par l'habitation. Le gestionnaire d'énergie 15 peut, par exemple, recevoir différents signaux de micro-onduleurs des panneaux photovoltaïques 18. Dans un autre mode de réalisation, un tore sur une ligne de réseau connectée à un compteur 26 du local détermine une énergie produite par le système photovoltaïque 16 et non consommée. Dans un autre mode de réalisation, les compteurs Linky ou un autre pourraient être utilisés. Le gestionnaire d'énergie 15 pourrait être intégré au système photovoltaïque 16.

Dans un mode de réalisation, afin de communiquer avec la carte de régulation 22, le gestionnaire d'énergie 15 émet à destination de la carte de régulation 22 un signal. Le signal pourrait être un signal de tension ou d'intensité selon le destinataire de ce signal. Ce signal est par exemple un signal 0/230V. Le gestionnaire d'énergie 15 pourrait ne pas communiquer par voie filaire. Par exemple, une liaison radio pourrait être utilisée entre le gestionnaire d'énergie 15 et la carte de régulation 22.

Le gestionnaire d'énergie 15 pourrait aussi réguler, en coopération avec la carte de régulation 22, la fonction du chauffe-eau 12 en fonction d'autres facteurs que le surplus d'énergie photovoltaïque immédiatement disponible.

Par exemple, le chauffe-eau 12 pourrait chauffer l'eau exclusivement avec le surplus de production des panneaux pendant les périodes diurnes. Ainsi le stockage d'énergie serait favorisé. Si la chauffe du ballon est réalisée en période diurne par le recours à l'énergie photovoltaïque, l'énergie du réseau pourrait n'être utilisée que pour gérer les manques en chaude. Hors période diurne (i.e. période nocturne), le chauffe-eau 12 pourrait être autorisé à utiliser l'énergie du réseau électrique.

Selon un autre méthode de fonctionnement, le chauffe-eau 12 est autorisé à utiliser l'énergie du réseau même pendant les périodes de production des panneaux photovoltaïques 18, c'est-à-dire, même pendant les périodes diurnes.

Selon un mode de fonctionnement, le mode de fonctionnement nocturne peut être anticipé en fin de phase diurne (c'est-à-dire, le mode de fonctionnement nocturne est activé en période diurne avant le coucher de soleil) si la production d'énergie photovoltaïque a été faible dans la journée. Ce mode de fonctionnement pourrait éviter aux usagers d'avoir de l'eau froide en fin de journée si l'ensoleillement est insuffisant, et ainsi améliorer le confort des usagers. Le système pourrait alors utiliser l'énergie du réseau pour pallier aux manques photovoltaïques afin que l'usager ait de l'eau chaude en fin de journée.

Le gestionnaire d'énergie 15 et/ou la carte de régulation 22 pourrait être connecté à un serveur ou un cloud pour recevoir par exemple des données météorologiques en particulier pour intégrer les prévisions journalières d'ensoleillement pour n'utiliser la ou les résistances complémentaires que si le potentiel de production des panneaux photovoltaïques 18 est insuffisant au cours de la journée.

Le gestionnaire d'énergie 15 pourrait aussi prendre en compte les habitudes de consommation de l'habitation pour réguler l'utilisation du surplus d'énergie photovoltaïque. Par exemple, le gestionnaire d'énergie 15 et/ou la carte de régulation 22 pourrait enregistrer la consommation sur les dernières 24 heures et en déduire un profil utilisateur afin de déterminer des besoins en eau chaude à assurer à certaines plages horaires. La valeur de base de la consigne de température pourrait alors varier dans le temps pour permettre un stockage d'eau chaude avant les périodes usuelles de consommation suivant le profil utilisateur.

En se référant maintenant à la figure 2, un exemple de carte de régulation et d'organe de chauffe pour l'installation 10 va être décrit. La carte de régulation 30 et l'organe de chauffe 32 sont utilisables dans cet exemple en conjonction avec un chauffe-eau électrique. Dans ce mode de réalisation, la carte de régulation 30 inclut un module de calcul 31, et trois relais 34 (I1, I2, I3). Les relais 34 sont connectés chacun à une résistance 36 (R1, R2, R3) respective. Lorsque le module de calcul 31 a déterminé la puissance de chauffe à commander à l'organe de chauffe 24, il sélectionne les résistances 36 à activer en actionnant un ou une combinaison des relais 34. Chacune des résistances 36 a une valeur associée, de sorte que l'activation d'une, deux ou trois de ces trois résistances 36 donne sept possibilités de résistances combinées, et donc de puissance de chauffe.

Par exemple, si la résistance R1 peut produire une puissance de 1600W, la résistance R2 de 800W, et la résistance R3 de 400W, alors l'utilisation (1 - dans le tableau ci-dessous) ou la non utilisation (0 - dans le tableau ci-dessous) de cette résistance en fonction des autres donne les sept valeurs de puissance totale Ptotal :

| R1 (1600W) | R2 (800W) | R3 (400W) | Ptotal(W) |
|---|---|---|---|
| 0 | 0 | 0 | 0 |
| 1 | 0 | 0 | 1600 |
| 1 | 1 | 0 | 2400 |
| 1 | 1 | 1 | 2800 |
| 0 | 1 | 0 | 800 |
| 0 | 0 | 1 | 400 |
| 0 | 1 | 1 | 1200 |

Si le gestionnaire d'énergie 15 détermine qu'une puissance de 2400W est en surplus (après avoir alimenté les appareils 20 et le chauffe-eau 12 en usage normal), et que cette puissance peut être stockée en chauffant l'eau du chauffe-eau 12 au-delà de sa température d'usage normal, le gestionnaire d'énergie 15 envoie, via le module de calcul 31, une commande à la carte de régulation 30 de fermer les relais I1 et I2 correspondants aux résistances R1 et R3, et d'ouvrir le relai I3 correspondant à la résistance I3. Ainsi, seules les résistances R1 et R2 sont actives et leur puissance associée est 1600+800=2400W.

Bien entendu, l'organe de chauffe 32 pourrait avoir seulement une, ou deux ou plus de trois résistances 36, et ainsi seulement un, deux ou plus de trois relais 34 associés. Dans le cas où l'organe de chauffe 32 aurait deux résistances 36, il y aurait potentiellement quatre puissances associées. On note également que certaines ou toutes les résistances 36 pourraient avoir une même valeur, ou des valeurs différentes. Par ailleurs, au moins une des résistances 36 pourrait être une résistance variable. L'organe de chauffe 32 pourrait avoir une seule résistance variable ou bien une combinaison de résistances variables et fixes.

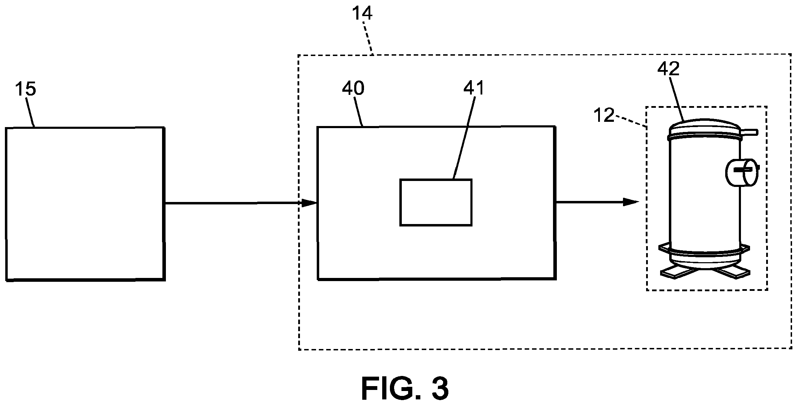

En se référant maintenant à la figure 3, un exemple de carte de régulation et d'organe de chauffe pour un chauffe-eau thermodynamique va être décrit. Une carte de régulation 40 commande l'organe de chauffe 42. Dans un mode de réalisation, l'organe de chauffe 42 est une pompe à chaleur avec vitesse de compresseur variable. La carte de régulation 40 module l'organe de chauffe 42 en commandant, une fréquence du compresseur. La carte de régulation 40 module le compresseur 42 de façon continue, c'est-à-dire sans incréments (à la différence de l'arrangement de résistances 36 décrit plus haut qui ne donnait que jusqu'à sept valeurs discrètes de puissance de chauffe) en fonction d'une commande du module de calcul 41.

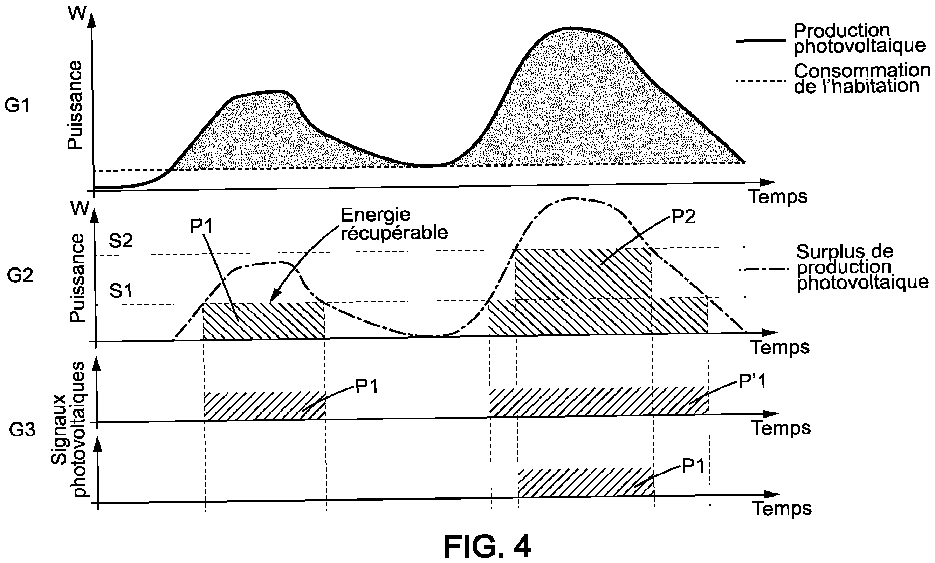

La figure 4 montre un exemple d'énergie produite par le système photovoltaïque 16 (trait continu) et d'énergie consommée (trait pointillé) au cours d'une période de temps, pour les systèmes décrits aux figures 2 ou 3 .

Le graphe G1 montre que l'énergie produite par le système photovoltaïque 16 (ligne continue) et l'énergie consommée par l'habitation (ligne pointillée) varient l'une par rapport à l'autre. Ainsi il existe des périodes où il y a plus d'énergie produite par le système photovoltaïque 16 que d'énergie consommée (i.e. surplus, zone en grisée). Ce surplus est aussi illustré dans le graphe G2 par une ligne de pointillés mixtes.

En référant au graphe G2, lorsqu'un premier seuil S1 de surplus est atteint et tant que le surplus est au-dessus de ce seuil S1, le gestionnaire d'énergie 15 commande la carte de régulation 30 (ou 40) de façon à chauffer à cette puissance. La puissance disponible est le surplus disponible au seuil S1 pour toute la durée de temps pour lequel le seuil S1 est atteint (parties hachurée P1).

Dans le mode de réalisation de la figure 2, la carte de régulation 30 active une des résistances R1, R2, R3 qui a une valeur inférieure et la plus proche à la puissance du seuil S1. Dans le mode de réalisation de la figure 3, la carte de régulation 40 active le compresseur de la pompe à chaleur à une vitesse correspondant à la puissance du seuil S1. Dans un mode de réalisation, un seuil le plus bas est supérieur à une vitesse nominale du compresseur.

Si un deuxième seuil S2 de surplus est atteint (S2 étant supérieur à S1), et tant que le surplus est au-dessus de ce seuil S2, la carte de régulation 30 commande une puissance de chauffe P2 supérieure à P1.

Dans le mode de réalisation de la figure 2, la carte de régulation 30 met en fonction de façon additionnelle une autre des résistances 36, de sorte que sa puissance (P1') combinée avec celle de la résistance activée pour le seuil S1 (P1) donne une puissance disponible (partie hachurée P2=P1+P1') du seuil S2. La puissance disponible est le surplus disponible au seuil S2 pour toute la durée de temps pour lequel le seuil S2 est atteint.

Dans le mode de réalisation de la figure 3, la carte de régulation 40 active le compresseur à une vitesse correspondant à la puissance du seuil S2.

Un seuil maximal atteignable (par exemple le seuil S2) est fonction des caractéristiques mécaniques de l'organe de chauffe 24.

Il se pourrait aussi que le système fonctionne sans paliers tels que les seuils S1 et S2. Ceci pourrait être par exemple réalisable avec le compresseur dans le cas d'un chauffe-eau thermodynamique ou avec une résistance variable de sorte qu'ils aient leur puissance modulable en temps réel en fonction de la fluctuation du surplus. Il se pourrait aussi que le système fonctionne de façon discrète (i.e. avec des paliers) seulement pour certaines puissances ou à certaines heures de la journée, et de façon continue pour le reste.

### Procédé de stockage d'énergie utilisant un chauffe-eau

Un procédé de stockage d'énergie utilisant n'importe quelle installation décrite ci-dessus va maintenant être décrit.

Le procédé de stockage d'énergie commence par une surveillance de la température de l'eau Teau contenue dans le chauffe-eau 12 par le thermomètre 13. Si le thermomètre 13 mesure une température Teau de l'eau égale ou supérieure à une valeur de base de la consigne de température Tbas, la carte de régulation 22 ne commande pas l'organe de chauffe 24 tant qu'aucun surplus d'énergie est produit par le système photovoltaïque 16. C'est-à-dire que si l'eau du chauffe-eau 12 est déjà assez chaude et qu'il n'y a pas de surplus photovoltaïque (ou que le surplus photovoltaïque est si faible qu'il ne permet pas un stockage d'énergie sous forme thermique), il n'y a pas de besoin pour chauffer l'eau de façon supplémentaire.

Par contre, si le gestionnaire d'énergie 15 communique à la carte de régulation 22 qu'un surplus d'énergie est produit par le système photovoltaïque 16, la carte de régulation 22 commande l'organe de chauffe 24 de chauffer l'eau même si l'eau est déjà à une température au-dessus de la consigne de base. Il se pourrait que le surplus d'énergie disponible soit plus faible que la valeur minimum de puissance de l'organe de chauffe 24, dans quel cas, la carte de régulation 22 ne commanderait pas l'organe de chauffe 24 de chauffer l'eau.

Lorsqu'un surplus d'énergie est disponible, la carte de régulation 22 commande l'organe de chauffe 24 afin de chauffer l'eau en utilisant le surplus, et ceci autant que le surplus est disponible, tout en étant en dessous de la valeur de surplus de la consigne de température Tsur. Le chauffage de l'eau se fait donc par l'énergie photovoltaïque en surplus (et non pas par l'énergie électrique du réseau) qui serait sinon réinjectée dans le réseau (et donc perdue). Selon le surplus disponible, le surplus peut permettre de chauffer l'eau à la valeur de base de la consigne de température ou à une valeur plus haute (tout en étant égale ou inférieure à la valeur de surplus de la consigne de température). En chauffant le chauffe-eau 12 au-delà de la température maximum désirée par l'utilisateur, le chauffe-eau 12 est utilisé comme moyen de stockage d'énergie en stockant l'énergie voltaïque en eau chaude en prévision de consommations futures.

L'information de surplus d'énergie photovoltaïque est communiquée à la carte de régulation 22 par le gestionnaire d'énergie 15. Le gestionnaire d'énergie 15 détermine une puissance de chauffe correspondant au moins à une partie du surplus d'énergie produit et non consommé par le système photovoltaïque 16. Le gestionnaire d'énergie 15 prend en compte l'information d'énergie non consommée, mais pourrait aussi prendre en compte d'autres informations, telles que des données sur des profils antérieurs de consommation du chauffe-eau 12 (pour par exemple s'assurer qu'ils sont en adéquation avec les perspectives de disponibilité énergétique des panneaux photovoltaïques 18 et éviter tout recours au réseau, ceci afin de s'approcher ou de réaliser un chauffe-eau 12 autonome).

La carte de régulation 22 envoie à l'organe de chauffe 24 une commande d'activation l'organe de chauffe 24 à la puissance de chauffe pour chauffer l'eau contenue dans le chauffe-eau 12. Dans le cas où la carte de régulation 22 a plusieurs entrées logiques, les entrées logiques qui permettent de combiner les résistances R1, R2, R3 (via les relais I1, I2, I3) de façon à atteindre la puissance de chauffe disponible, sont activées. Dans le cas de la carte de régulation 40 et de la pompe à chaleur, la carte de régulation 40 commande le compresseur à une vitesse correspondant à la puissance de chauffe déterminée.

Dans un mode de réalisation, la puissance de chauffe serait ajustable en temps réel en fonction du surplus d'énergie. Dans un autre mode de réalisation, la puissance de chauffe serait ajustable par incrément de temps prédéterminés (par exemple toutes les cinq minutes).

Si le thermomètre 13 mesure une température Teau de l'eau contenue dans le chauffe-eau 12 inférieure à la valeur de base de la consigne de température Tbas, et si le gestionnaire d'énergie 15 communique à la carte de régulation 22 qu'aucun surplus d'énergie est produit par le système photovoltaïque 16, alors la carte de régulation 22 commande l'organe de chauffe 24 de chauffer l'eau jusqu'à la valeur de base de la consigne de température Tbas en utilisant de l'énergie autre que celle produite par le système photovoltaïque 16, c'est-à-dire, l'énergie du réseau.

Si le thermomètre 13 mesure une température Teau de l'eau contenue dans le chauffe-eau 12 inférieure à la valeur de base de la consigne de température Tbas, et si le gestionnaire d'énergie 15 communique à la carte de régulation 22 qu'un surplus d'énergie est produit par le système photovoltaïque 16, la carte de régulation 22 commande l'organe de chauffe 24 de chauffer l'eau en utilisant l'énergie produite par le système photovoltaïque 16 en fonction du surplus jusqu'à une valeur de surplus de la consigne de température Tsur, la valeur de surplus de la consigne de température Tsur étant supérieure à la valeur de base de la consigne de température Tbas.

Selon un mode de fonctionnement, lorsque la puissance de chauffe provenant du surplus photovoltaïque est inférieure à la valeur de surplus de la consigne de température Tsur, la carte de régulation 22 pourrait commander l'organe de chauffe 24 de façon à chauffer l'eau jusqu'à la valeur de base de la consigne de température Tbas en utilisant, de façon complémentaire à l'énergie provenant du surplus photovoltaïque, de l'énergie autre que celle produite par le système photovoltaïque 16, c'est à dire de l'énergie du réseau électrique. Ceci pourrait plus particulièrement être implémenté pendant les phases nocturnes où l'énergie photovoltaïque diminue.

### Avantages

L'installation 10 et procédé de stockage d'énergie décrits ci-dessous permettent de stocker un surplus d'énergie produite par les panneaux photovoltaïques 18, qui serait sinon injecté au réseau d'alimentation, en énergie thermique, sous forme d'eau chauffée disponible dans le chauffe-eau 12.

Le procédé est applicable aux systèmes utilisant des chauffe-eau électriques et/ou thermodynamiques. L'installation 10 peut utiliser des composants simples tels que les relais I1, I2, I3 pour effectuer la modulation de puissance électrique. De plus, l'intégration des composants servant à l'application du procédé est minimale, et l'installation 10 est adaptable à divers environnements, notamment implantable sur des chauffe-eau existants.

## Revendications

1. Installation (10) de stockage d'énergie comprenant :
un système photovoltaïque,
des moyens de production d'énergie autres que le système photovoltaïque, et
un dispositif (14) de chauffage d'eau destiné à alimenter un local en eau chaude, le dispositif de chauffage d'eau comprenant :
un chauffe-eau (12) incluant :
- un organe de chauffe (24) pour chauffer de l'eau contenue dans le chauffe-eau (12),
- un thermomètre (13) pour mesurer une température de l'eau Teau contenue dans le chauffe-eau (12), et
une carte de régulation (22) connectée à l'organe de chauffe (24) et au thermomètre (13), la carte de régulation (22) étant adaptée à réguler l'organe de chauffe (24) en fonction d'énergie reçue par le système photovoltaïque (16) et d'énergie reçue par les moyens autres que le système photovoltaïque (16),
la carte de régulation (22) étant adaptée à déterminer une puissance de chauffe à commander à l'organe de chauffe (24) en fonction d'une consigne de température, la consigne de température ayant une valeur de base Tbas, et une valeur de surplus Tsur supérieure à la valeur de base Tbas;
l'installation étant **caractérisée en ce qu'**elle comprend
un gestionnaire d'énergie (15) connecté à la carte de régulation (22) et au système photovoltaïque (16), le gestionnaire d'énergie (15) étant adapté à communiquer à la carte de régulation (22) qu'un surplus d'énergie produit par le système photovoltaïque (16) est disponible, et lorsque de plus la température de l'eau contenue dans le chauffe-eau (12) est inférieure à la valeur de surplus Tsur de la consigne de température, la carte de régulation (22) étant adaptée à déterminer à partir du surplus disponible une puissance de chauffe à commander à l'organe de chauffe (24) afin de stocker au moins une partie du surplus d'énergie sous forme d'eau chaude disponible dans le chauffe-eau (12), et la carte de régulation commandant l'organe de chauffe de chauffer l'eau du chauffe-eau en utilisant le surplus d'énergie photovoltaïque tant que la température de l'eau est inférieure à la valeur de surplus Tsur.

2. Installation selon la revendication 1, dans laquelle la valeur de base de la consigne de température est fonction de consommations antérieures en eau chaude du chauffe-eau (12), caractéristiques du chauffe-eau (12), et/ou prévisions de consommation.

3. Installation selon l'une des revendications 1 ou 2, dans laquelle l'organe de chauffe (24) du chauffe-eau (12) est électrique et/ou thermodynamique.

4. Installation selon la revendication 3, dans laquelle l'organe de chauffe (24) du chauffe-eau (12) inclut un élément électrique, l'élément électrique incluant une pluralité de résistances, les résistances étant chacune couplée à un relai, les relais étant connectés à la carte de régulation, la carte de régulation étant adaptée à déterminer les relais à actionner en fonction de la valeur de surplus de la consigne de température.

5. Installation selon la revendication 3, dans laquelle l'organe de chauffe du chauffe-eau inclut une pompe à chaleur (42) avec vitesse de compresseur variable, la carte de régulation étant adaptée à contrôler une vitesse du compresseur.

6. Installation selon l'une des revendications 1 à 5, incluant de plus un mitigeur thermostatique, le mitigeur thermostatique étant adapté à délivrer l'eau du chauffe-eau (12) à une température maximale égale à la valeur de base de la consigne de température lorsque la température de l'eau du chauffe-eau (12) est à ou au-dessus de la valeur de base de la consigne de température.

7. Procédé de régulation d'une installation (10) selon l'une quelconque des revendications 1 à 6, dans lequel si le gestionnaire d'énergie (15) communique à la carte de régulation (22) qu'un surplus d'énergie est produit par le système photovoltaïque (16), la carte de régulation (22) commande à l'organe de chauffe (24) de chauffer l'eau en utilisant l'énergie produite par le système photovoltaïque (16) en surplus, la puissance de chauffe chauffant l'eau à une température égale ou inférieure à une valeur de surplus de la consigne de température Tsur, la valeur de surplus de la consigne de température Tsur étant supérieure à la valeur de base de la consigne de température Tbas.

8. Procédé selon la revendication 7, dans lequel si le thermomètre (13) mesure une température Teau de l'eau contenue dans le chauffe-eau (12) égale ou supérieure à la valeur de base de la consigne de température Tbas, la carte de régulation (22) ne commande pas l'organe de chauffe (24) tant qu'aucun surplus d'énergie produit par le système photovoltaïque (16) n'est disponible.

9. Procédé selon la revendication 7 ou 8, dans lequel si le thermomètre (13) mesure une température Teau de l'eau contenue dans le chauffe-eau (12) inférieure à la valeur de base de la consigne de température Tbas et si le gestionnaire d'énergie (15) communique à la carte de régulation (22) qu'aucun surplus d'énergie n'est produit par le système photovoltaïque (16), la carte de régulation (22) commande l'organe de chauffe (24) de chauffer l'eau jusqu'à la valeur de base de la consigne de température Tbas en utilisant de l'énergie autre que celle produite par le système photovoltaïque (16).

10. Procédé selon la revendication 7, dans lequel selon un mode de fonctionnement, lorsque la puissance de chauffe provenant du surplus photovoltaïque est inférieure à la valeur de surplus de la consigne de température Tsur, la carte de régulation (22) commande à l'organe de chauffe (24) de chauffer l'eau jusqu'à la valeur de base de la consigne de température Tbas en utilisant, de façon complémentaire à l'énergie provenant du surplus photovoltaïque, de l'énergie autre que celle produite par le système photovoltaïque (16).

11. Procédé selon la revendication 10, dans lequel le mode de fonctionnement est un mode de fonctionnement nocturne.

12. Procédé selon la revendication 11, dans lequel le mode de fonctionnement nocturne est activé en période diurne avant le coucher de soleil.

## Patentansprüche

1. Installation (10) zur Energiespeicherung, umfassend:
ein Photovoltaiksystem,
andere Mittel zu Energieerzeugung als das Photovoltaiksystem, und
eine Wasserheizvorrichtung (14), die dazu bestimmt ist, einen Raum mit heißem Wasser zu versorgen, wobei die Wasserheizvorrichtung umfasst:
einen Warmwasserbereiter (12), umfassend:
- ein Heizelement (24) zum Erhitzen des im Warmwasserbereiter (12) enthaltenen Wassers,
- ein Thermometer (13) zum Messen einer Temperatur Teau des im Warmwasserbereiter (12) enthaltenen Wassers; und
eine Steuer-/Regelplatine (22), die mit dem Heizelement (24) und dem Thermometer (13) verbunden ist, wobei die Steuer-/Regelplatine (22) dazu ausgebildet ist, das Heizelement (24) gemäß der von dem Photovoltaiksystem aufgenommenen Energie (16) und der Energie, die von den anderen Mitteln als dem Photovoltaiksystem (16) aufgenommen wird, zu steuern/regeln,
wobei die Steuer-/Regelplatine (22) dazu ausgebildet ist, eine vom Heizelement (24) anzufordernde Heizleistung als Funktion eines Temperatur-Sollwerts zu bestimmen, wobei der Temperatur-Sollwert einen Basiswert Tbas und einen
Überschusswert Tsur aufweist, der größer dem Basiswert Tbas ist; und
wobei die Installation **dadurch gekennzeichnet ist, dass** sie umfasst:
einen Energiemanager (15), der mit der Steuer-/Regelplatine (22) und dem Photovoltaiksystem (16) verbunden ist, wobei der Energiemanager (15) dazu ausgebildet ist, der Steuer-/Regelplatine (22) mitzuteilen, dass ein Überschuss von Energie verfügbar ist, die von dem Photovoltaiksystem (16) erzeugt wird, und wobei,
wenn darüber hinaus die Temperatur des im Warmwasserbereiter (12) enthaltenen Wassers niedriger ist als der Überschusswert Tsur des Temperatur-Sollwerts, die Steuer-/Regelplatine (22) dazu ausgebildet ist, ausgehend von dem verfügbaren Überschuss eine Heizleistung zu bestimmen, die vom Heizelement (24) anzufordern ist, um mindestens einen Teil des Überschusses an Energie in Form von im Warmwasserbereiter verfügbarem Warmwasser zu speichern (12), und wobei die Steuer-/Regelplatine das Heizelement anweist, das Wasser des Warmwasserbereiters unter Verwendung der überschüssigen Photovoltaik-Energie zu erwärmen, solange die Wassertemperatur niedriger als der Überschusswert Tsur ist.

2. Installation nach Anspruch 1, wobei der Basiswert des Temperatur-Sollwerts eine Funktion des vorherigen Warmwasserverbrauchs des Warmwasserbereiters (12), von Eigenschaften des Warmwasserbereiters (12) oder/und von Verbrauchsprognosen ist.

3. Installation nach einem der Ansprüche 1 oder 2, wobei das Heizelement (24) des Warmwasserbereiters (12) elektrisch oder/und thermodynamisch ist.

4. Installation nach Anspruch 3, wobei das Heizelement (24) des Warmwasserbereiters (12) ein elektrisches Element enthält, wobei das elektrische Element mehrere Widerstände enthält, wobei die Widerstände jeweils mit einem Relais verbunden sind, wobei die Relais an die Steuer-/Regelplatine angeschlossen sind, wobei die Steuer-/Regelplatine dazu ausgebildet ist, die zu betätigenden Relais als Funktion des Überschusswerts des Temperatur-Sollwerts zu bestimmen.

5. Installation nach Anspruch 3, wobei das Heizelement des Warmwasserbereiters eine Wärmepumpe (42) mit variabler Kompressor-Drehzahl umfasst, wobei die Steuer-/Regelplatine zur Steuerung/Regelung einer Kompressor-Drehzahl angepasst ist.

6. Installation nach einem der Ansprüche 1 bis 5, ferner umfassend einen Thermostat-Mischer, wobei der Thermostat-Mischer so ausgelegt ist, dass er Wasser aus dem Warmwasserbereiter (12) mit einer Maximaltemperatur liefert, die dem Basiswert des Temperatur-Sollwerts entspricht, wenn die Wassertemperatur des Warmwasserbereiters (12) auf oder über dem Basiswert des Temperatur-Sollwerts liegt.

7. Verfahren zur Steuerung/Regelung einer Installation (10) nach einem der Ansprüche 1 bis 6, wobei, wenn der Energiemanager (15) der Steuer-/Regelplatine (22) mitteilt, dass ein Überschuss von Energie von dem Photovoltaiksystem (16) erzeugt wird, die Steuer-/Regelplatine (22) das Heizelement (24) anweist, das Wasser unter Verwendung der von dem Photovoltaiksystem (16) erzeugten überschüssigen Energie zu erwärmen, wobei die Heizleistung das Wasser auf eine Temperatur erwärmt, die gleich oder kleiner als ein Überschusswert Tsur des Temperatur-Sollwerts ist, wobei der Überschusswert Tsur des Temperatur-Sollwerts größer dem Basiswert Tbas des Temperatur-Sollwerts ist.

8. Verfahren nach Anspruch 7, wobei, wenn das Thermometer (13) eine Temperatur Teau des im Warmwasserbereiter (12) enthaltenen Wassers misst, die gleich oder größer als der Basiswert Tbas des Temperatur-Sollwerts ist, die Steuer-/Regelplatine (22) das Heizelement (24) nicht ansteuert, solange keine überschüssige Energie verfügbar ist, die von dem Photovoltaiksystem (16) erzeugt wird.

9. Verfahren nach Anspruch 7 oder 8, wobei, wenn das Thermometer (13) eine Temperatur Teau des im Warmwasserbereiter (12) enthaltenen Wassers misst, die niedriger ist als der Basiswert Tbas des Temperatur-Sollwerts, und wenn der Energiemanager (15) der Steuer-/Regelplatine (22) mitteilt, dass keine überschüssige Energie von dem Potovoltaiksystem (16) erzeugt wird, die Steuer-/Regelplatine (22) das Heizelement (24) anweist, das Wasser mit anderer als der von dem Photovoltaiksystem (16) erzeugten Energie auf den Basiswert Tbas des Temperatur-Sollwerts zu erwärmen.

10. Verfahren nach Anspruch 7, wobei gemäß einer Betriebsart dann, wenn die Heizleistung, die aus dem Photovoltaik-Überschuss stammt, kleiner als der Überschusswert Tsur des Temperatur-Sollwerts ist, die Steuer-/Regelplatine (22) das Heizelement (24) anweist, das Wasser auf den Basiswert Tbas des Temperatur-Sollwerts zu erwärmen, wobei zusätzlich zu der aus dem Photovoltaik-Überschuss stammenden Energie andere Energie als die von dem Photovoltaiksystem (16) erzeugte verwendet wird.

11. Verfahren nach Anspruch 10, wobei die Betriebsart eine Nacht-Betriebsart ist.

12. Verfahren nach Anspruch 11, wobei die Nacht-Betriebsart in der Tagperiode vor dem Sonnenuntergang aktiviert wird.

## Claims

1. Energy storage facility (10) comprising:
a photovoltaic system,
energy production means other than the photovoltaic system, and
a water heating device (14) intended for supplying a room with hot water, the water heating device comprising:
a water heater (12) including:
- a heating member (24) for heating water contained in the water heater (12),
- a thermometer (13) for measuring a temperature of the water Teau contained in the water heater (12); and
a regulating board (22) connected to the heating member (24) and to the thermometer (13), the regulating board (22) being suitable for regulating the heating member (24) according to energy received by the photovoltaic system (16) and energy received by the means other than the photovoltaic system (16),
the regulating board (22) being suitable for determining a heating power to be controlled from the heating member (24) according to a temperature setpoint, the temperature setpoint having a base value Tbas, and a surplus value Tsur greater than the base value Tbas;
the facility being **characterized**
**in that** it comprises an energy manager (15) connected to the regulating board (22) and to the photovoltaic system (16), the energy manager (15) being suitable for communicating to the regulating board (22) that a surplus of energy produced by the photovoltaic system (16) is available, and in addition when the temperature of the water contained in the water heater (12) is lower than the surplus value Tsur of the temperature setpoint, the regulating board (22) being suitable for determining from the available surplus a heating power to be controlled from the heating member (24) in order to store at least a portion of the surplus in the form of hot water available in the water heater (12), and the regulating board controlling the heating member to heat the water of the water heater using the surplus photovoltaic energy as long as the water temperature is lower than the surplus value Tsur.

2. Facility according to claim 1, wherein the base value of the temperature setpoint is a function of previous hot water consumption from the water heater (12), characteristics of the water heater (12), and/or consumption projections.

3. Facility according to one of claims 1 or 2, wherein the heating member (24) of the water heater (12) is electric and/or thermodynamic.

4. Facility according to claim 3, wherein the heating member (24) of the water heater (12) includes an electrical element, the electrical element including a plurality of resistors, the resistors being each coupled to a relay, the relays being connected to the regulating board, the regulating board being suitable for determining the relays to be actuated according to the surplus value of the temperature setpoint.

5. Facility according to claim 3, wherein the heating member of the water heater includes a heat pump (42) with variable compressor speed, the regulating board being suitable for controlling a speed of the compressor.

6. Facility according to one of claims 1 to 5, further including a thermostatic mixing valve, the thermostatic mixing valve being suitable for delivering water from the water heater (12) at a maximum temperature equal to the base value of the temperature setpoint when the temperature of the water of the water heater (12) is at or above the base value of the temperature set point.

7. Method for regulating a facility according to any one of claims 1 to 6, wherein, if the energy manager (15) communicates to the regulating board (22) that a surplus of energy is being produced by the photovoltaic system (16), the regulating board (22) controls the heating member (24) to heat the water using the surplus energy produced by the photovoltaic system (16), the heating power heating the water to a temperature less than or equal to a surplus value of the temperature setpoint Tsur, the surplus value of the temperature setpoint Tsur being greater than the base value of the temperature setpoint Tbas.

8. Method according to claim 7, wherein if the thermometer (13) measures a temperature Teau of the water contained in the water heater (12) that is greater than or equal to the base value of the temperature setpoint Tbas, the regulating board (22) does not control the heating member (24) as long as no surplus energy produced by the photovoltaic system (16) is available.

9. Method according to claim 7 or 8, wherein if the thermometer (13) measures a temperature Teau of the water contained in the water heater (12) that is less than the base value of the temperature setpoint Tbas and if the energy manager (15) communicates to the regulating board (22) that no surplus energy is being produced by the photovoltaic system (16), the regulating board (22) controls the heating member (24) to heat the water up to the base value of the temperature setpoint Tbas using energy other than that produced by the photovoltaic system (16).

10. Method according to claim 7, wherein according to one mode of operation, when the heating power from the photovoltaic surplus is less than the surplus value of the temperature set Tsur, the regulating board (22) controls the heating member (24) to heat the water up to the base value of the temperature setpoint Tbas using, in addition to the energy from the photovoltaic surplus, energy other than that produced by the photovoltaic system (16).

11. Method according to claim 10, wherein the mode of operation is a nighttime mode of operation.

12. Method according to claim 11, wherein the nighttime mode of operation is activated during the daytime period before sunset.
